# EUROPEAN PATENT SPECIFICATION

(11) **EP 2 938 111 B1**
(45) Date of publication and mention of the grant of the patent: **20.07.2016**
(21) Application number: 14166312.0
(22) Date of filing: 29.04.2014
(51) Int. Cl.: H04W 12/06, H04W 12/12

(54) **METHODS FOR USER ACCESS CONTROL OVER A MOBILE COMMUNICATION DEVICE, AND APPARATUSES USING THE SAME**
VERFAHREN ZUR BENUTZERZUGRIFFSSTEUERUNG AUF EINE MOBILE KOMMUNIKATIONSVORRICHTUNG UND VORRICHTUNGEN ZUR VERWENDUNG DAVON
PROCÉDÉS DE CONTRÔLE D'ACCÈS UTILISATEUR SUR UN DISPOSITIF DE COMMUNICATION MOBILE ET APPAREILS LES UTILISANT

(30) Priority: 21.04.2014 US 201414257112
(43) Date of publication of application: 28.10.2015
(73) Proprietor: Acer Incorporated, Taipei County 221 (TW)
(72) Inventor: Ye, Shiang-Rung, 221 Hsichih, New Taipei City (TW); Kuo, Shih-Chun, 221 Hsichih, New Taipei City (TW)
(74) Representative: 2K Patentanwälte Blasberg Kewitz & Reichel

(56) References cited:
- WO-A1-2010/035070
- WO-A1-2014/037053

## Description

### CROSS REFERENCE TO RELATED APPLICATIONS

### BACKGROUND OF THE INVENTION

### FIELD OF THE INVENTION

The invention generally relates to security control over mobile devices, and more particularly, to apparatuses and methods for user access control over a mobile communication device.

### DESCRIPTION OF THE RELATED ART

With rapid developments in ubiquitous computing and networking, various wireless technologies, including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced technology, and Time- Division LTE (TD-LTE) technology, etc., have been developed for wireless communications, thereby expediting the growth of varieties of mobile services, such as online shopping, online banking, blogging, and cloud management, etc.

Since a user generally uses mobile services on his/her mobile device, private information (e.g., phone books, Application (App) messages, and pictures) and important information (e.g., accounts of Apps, banking, and E-transactions) is contained in the mobile device, so if the mobile device is lost or stolen, the private and important information may be exposed to strangers, or even worse, may be applied for illegal use. For this reason, access security of mobile devices has become one of the major issues in the field of personal mobile applications. In most practices, it is proposed to lock a lost mobile device by sending an encrypted short message or a pre-defined text message to the lost mobile device. However, this mechanism doesn't work if the lost mobile device is currently in a state where connection to any service network cannot be established. Alternatively, it is proposed to lock a lost mobile device when the subscriber identity card coupled therein is removed or replaced. However, this mechanism doesn't work if a fake subscriber identity card cloned from the original subscriber identity card is coupled back into the lost mobile device.

Thus, it is desirable to have a more robust way of protecting the private and important information contained in mobile devices from theft.

### BRIEF SUMMARY OF THE INVENTION

In order to solve the aforementioned problem, the invention proposes to lock a mobile communication device based on the determination of whether it can attach to a service network and whether a subscriber identity card coupled therein is authentic.

In one aspect of the invention, a mobile communication device initially expediting the growth of varieties of mobile services, such as online shopping, online banking, blogging, and cloud management, etc.

Since a user generally uses mobile services on his/her mobile device, private information (e.g., phone books, Application (App) messages, and pictures) and important information (e.g., accounts of Apps, banking, and E-transactions) is contained in the mobile device, so if the mobile device is lost or stolen, the private and important information may be exposed to strangers, or even worse, may be applied for illegal use. For this reason, access security of mobile devices has become one of the major issues in the field of personal mobile applications. In most practices, it is proposed to lock a lost mobile device by sending an encrypted short message or a pre-defined text message to the lost mobile device. However, this mechanism doesn't work if the lost mobile device is currently in a state where connection to any service network cannot be established. Alternatively, it is proposed to lock a lost mobile device when the subscriber identity card coupled therein is removed or replaced. However, this mechanism doesn't work if a fake subscriber identity card cloned from the original subscriber identity card is coupled back into the lost mobile device.

In a relevant prior art, WO 2010/035070 A1, a method for locking a removable device to a specific host device is proposed, which includes the steps of: establishing a plurality of challenge-response pairings with a locked subscriber identity device; selecting an unused challenge-response pairing from the plurality of challenge-response pairings; marking the selected challenge-response pairing as used; sending the challenge from the selected challenge-response pairing to a connected subscriber identity device and receiving a response from the connected subscriber identity device; and determining whether the connected subscriber identity device is the locked subscriber identity device based at least in part upon a comparison of the received response to the response in the selected challenge-response pairing.

In another relevant prior art, WO 2014/037053 A1, a method for protecting a wireless communications device against unauthorized use of functionality provided by the wireless communications device is proposed, which includes the steps of: receiving a binding command to bind the wireless communications device to a subscription identification module operationally coupled to the wireless communications device and associated with a subscription to a communications service; responsive to the received command, storing a module identifier identifying the subscription identification module; and storing a device identifier identifying the wireless communications device; obtaining an unbind code and storing the obtained unbind code; performing a module verification verifying that a subscription identification module identified by a stored module identifier is operationally coupled to the wireless communications device, performing a device verification verifying whether a wireless communications device identified by a stored device identifier is operationally coupled to the subscription identification module; and preventing operation of at least a part of said functionality unless the module verification and the device verification have been performed successfully.

Thus, it is desirable to have a more robust way of protecting the private and important information contained in mobile devices from theft.

### BRIEF SUMMARY OF THE INVENTION

In order to solve the aforementioned problem, the invention proposes to lock a mobile communication device based on the determination of whether it can attach to a service network and whether a subscriber identity card coupled therein is authentic.

In one aspect of the invention, a mobile communication device initially configured to enter a locked state upon being powered on is provided. The mobile communication device comprises a wireless communication unit and a processing unit. The wireless communication unit is configured to perform wireless transmission and reception to and from a service network. The processing unit is configured to determine whether a subscriber identity card coupled in the mobile communication device is authentic, by checking a challenge response received from the subscriber identity card, and perform an attach procedure with the service network via the wireless communication unit in response to the subscriber identity card being authentic. Also, the processing unit is configured to allow the mobile communication device to enter an unlocked stated from the locked state in response to the attach procedure being successful.

In another aspect of the invention, a method for user access control over a mobile communication device which is initially configured to enter a locked state upon being powered on is provided. The method comprises the steps of: determining, by the mobile communication device, whether a subscriber identity card coupled therein is authentic, by checking a challenge response received from the subscriber identity card; performing, by the mobile communication device, an attach procedure with a service network in response to the subscriber identity card being authentic; and entering, by the mobile communication device, an unlocked stated from the locked state in response to the attach procedure being successful.

Other aspects and features of the invention will become apparent to those with ordinary skill in the art upon review of the following descriptions of specific embodiments of the mobile communication devices and the methods for user access control over a mobile communication device.

### BRIEF DESCRIPTION OF DRAWINGS

The invention can be more fully understood by reading the subsequent detailed description and examples with references made to the accompanying drawings, wherein:
Fig. 1 is a block diagram of a mobile communication environment according to an embodiment of the invention;
Fig. 2 is a block diagram illustrating the mobile communication device 110 according to an embodiment of the invention;
Figs. 3A and 3B show a flow chart illustrating the method for user access control over a mobile communication device according to an embodiment of the invention; and
Fig. 4 is a state transition diagram for the locking and unlocking of a mobile communication device according to the embodiment of Fig. 3.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

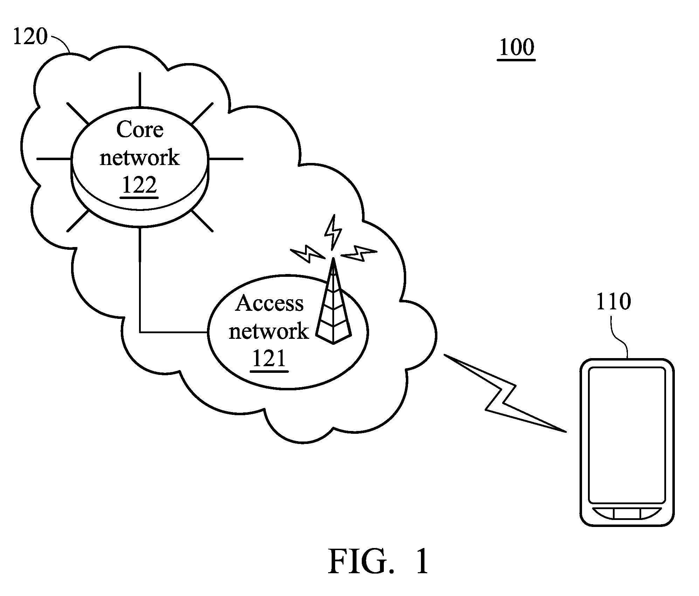

Fig. 1 is a block diagram of a mobile communication environment according to an embodiment of the invention. The mobile communication environment 100 comprises a mobile communication device 110 and a service network 120, wherein the mobile communication device 110 is wirelessly connected to the service network 120 with a subscriber number for obtaining mobile services, including voice and data services, e.g., online shopping, online banking, blogging, and cloud management, etc. The mobile communication device 110 may be a feature phone, a smartphone, a panel Personal Computer (PC), a laptop computer, or any computing device supporting the wireless technology utilized by the service network 120. The service network 120 may be a GSM system, GPRS system, WCDMA system, CDMA-2000 system, TD-SCDMA system, WiMAX system, LTE system, LTE-Advanced system, or TD-LTE system, etc., depending on the wireless technology in use. The subscriber number may be provided by a subscriber identity card coupled in/to/with the mobile communication device 110, which is in compliance with the specifications of the wireless technologies utilized by the service network 120. For example, if the service network 120 is a GSM/GPRS/EDGE system, then the subscriber identity card may be a Subscriber Identity Module (SIM) card, or if the service network 120 is a WCDMA/LTE/LTE-Advanced system, then the subscriber identity card may be a Universal SIM (USIM) card.

To further clarify, the service network 120 comprises at least an access network 121 and a core network 122, wherein the access network 121 is responsible for processing radio signals, terminating radio protocols, and connecting the mobile communication device 110 with the core network 122, and the core network 122 is responsible for performing mobility management, network-side authentication, and interfaces with public networks, e.g., the Internet. The access network 121 may comprise a base station for providing the functionality of wireless transceiving for the service network 120. Alternatively, the access network 121 may further comprise a base station controller for controlling the operation of the base station, or the base station controller may be incorporated into the base station.

For example, if the service network 120 is a GSM/GPRS/EDGE/WCDMA system, the access network 121 may be a Base Station Subsystem (BSS) which includes at least a Base Transceiver Station (BTS) and a Base Station Controller (BSC), and the core network 122 may be a GPRS core which includes a Home Location Register (HLR), at least one Serving GPRS Support Node (SGSN), at least one Gateway GPRS Support Node (GGSN). Alternatively, if the service network 120 is an LTE/LTE-Advanced system, the access network 121 may be an Evolved-UTRAN (E-UTRAN) which includes at least an evolved NB (eNB), and the core network 122 may be an Evolved Packet Core (EPC) which includes a Home Subscriber Server (HSS), Mobility Management Entity (MME), Serving Gateway (S-GW), Packet Data Network Gateway (PDN-GW or P-GW).

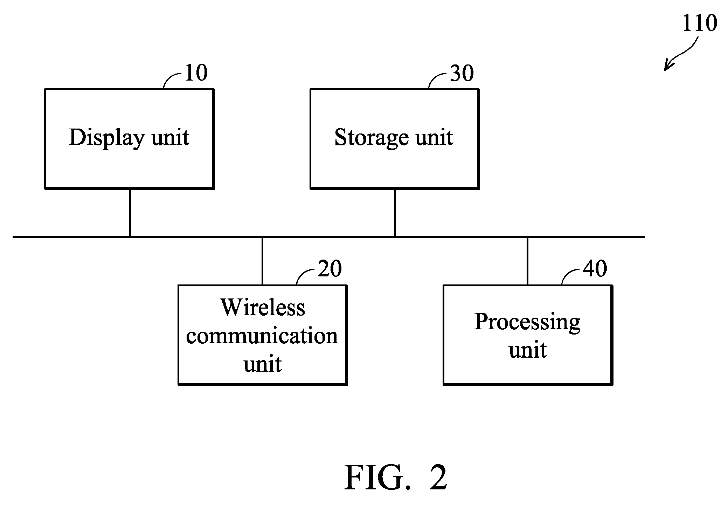

Fig. 2 is a block diagram illustrating the mobile communication device 110 according to an embodiment of the invention. A mobile communication device 110 comprises a display unit 10, a wireless communication unit 20, a storage unit 30, and a processing unit 40. The display unit 10 may be a Liquid Crystal Display (LCD), Light-Emitting Diode (LED) display, or Electronic Paper Display (EPD), etc., for providing display function. Alternatively, the display unit 10 may further comprise one or more touch sensors disposed thereon or thereunder for sensing touches, contacts, or approximations of objects, such as fingers or styluses.

The wireless communication unit 20 is responsible for performing the functionality of wireless transmission and reception to and from the service network 120 using a subscriber number. Specifically, the wireless communication unit 20 may comprise an antenna, a Radio Frequency (RF) unit, and a baseband unit, wherein the baseband unit is coupled to/with a subscriber identity card, e.g., a SIM/USIM card, which provides the subscriber number. The baseband unit performs baseband signal processing, including analog-to-digital conversion (ADC)/digital-to-analog conversion (DAC), gain adjusting, modulation/demodulation, encoding/decoding, and so on. The RF unit receives RF wireless signals via the antenna, converts the received RF wireless signals to baseband signals, which are processed by the baseband unit, or receives baseband signals from the baseband unit and converts the received baseband signals to RF wireless signals, which are later transmitted via the antenna. The operative radio frequency may be 900MHz, 1800MHz, or 1900MHz utilized in the GPRS/GPRS/EDGE technology, or 900MHz, 1900MHz, or 2100MHz utilized in WCDMA technology, or 900MHz, 2100MHz, or 2.6GHz utilized in LTE/LTE-Advanced technology, or others depending on the wireless technology in use.

The storage unit 30 may be a memory (e.g., Random Access Memory (RAM), Flash memory, or Non-Volatile Random Access Memory (NVRAM), etc.), a magnetic storage device (e.g., magnetic tap or hard disk), an optical storage device (e.g., Compact Disc Read-Only Memory (CD-ROM)), or any combination thereof for storing instructions and/or program codes of applications and/or communication protocols.

The processing unit 40 may be a general-purpose processor, a Micro-Control Unit (MCU), a Digital Signal Processor (DSP), or others, which provides the function of data processing and computing, and controls the operation of the display unit 10 and the wireless communication unit 20, and loads and executes a series of instructions and/or program codes from the storage unit 30 to perform the method of user access control. In another embodiment, the processing unit 40 may be an MCU of a baseband chip that is incorporated in the wireless communication unit 20.

Although not shown, the mobile communication device 110 may further comprise other functional units, such as an Input/Output (I/O) device (e.g., button, keyboard, mouse, or touch pad, etc.), a power supply, and a Global Positioning System (GPS) unit for obtaining location information, etc., and the invention is not limited thereto.

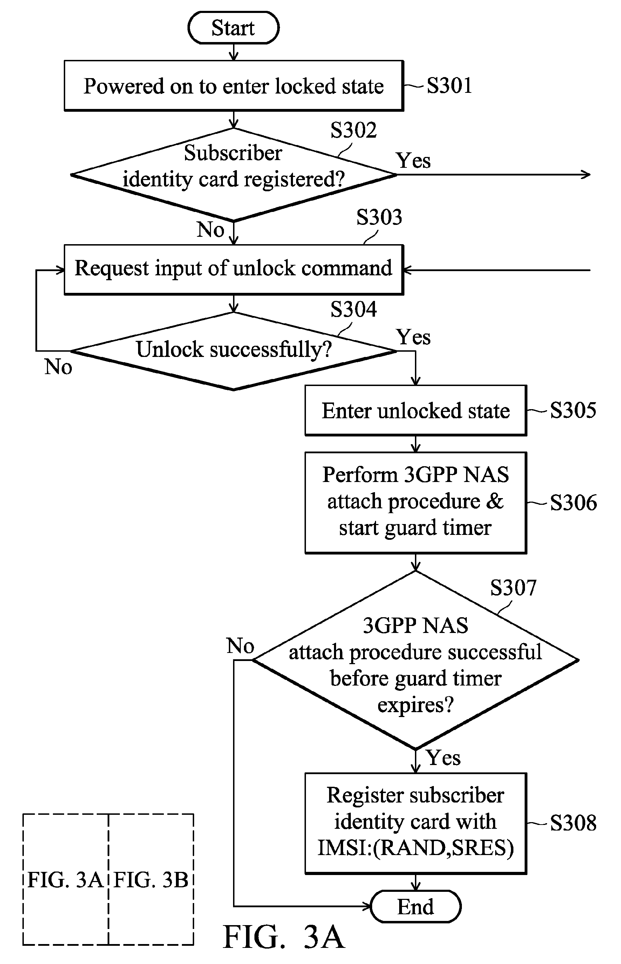

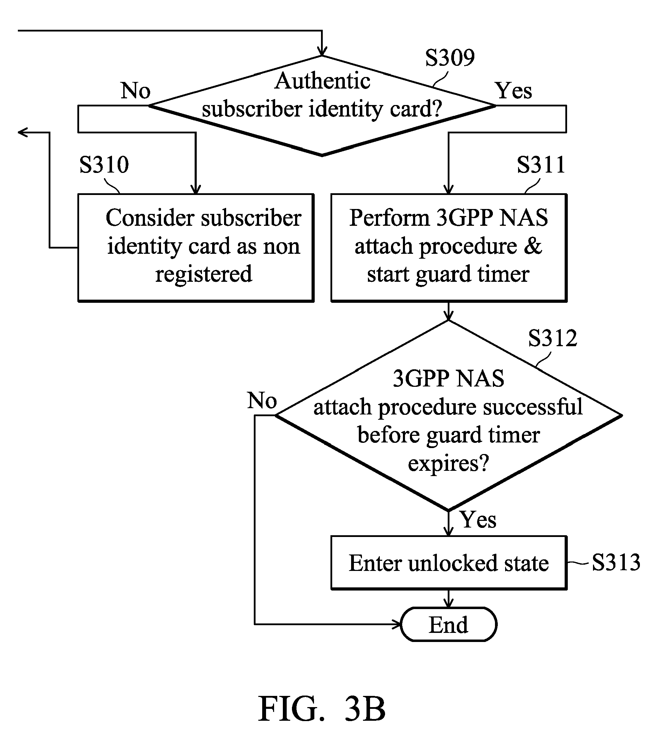

Figs. 3A and 3B show a flow chart illustrating the method for user access control over a mobile communication device according to an embodiment of the invention. To begin, the mobile communication device is powered on to initially enter the locked state (step S301). Please note that, in the locked state, the mobile communication device will be locked from any user access when the screen (e.g., the display unit 10) is switched off or when the mobile communication device is idle (i.e., no user operation of the mobile communication device is detected) for a predetermined period of time (e.g., 30 seconds). When the mobile communication device is locked, no user access to the mobile communication device is allowed. For example, the mobile communication device may be locked using a screen lock which is set up by the user and requires a specific unlock command, such as texts/numbers, a gesture, a facial image, a fingerprint touch, or others, from the user to unlock it.

In another embodiment, before step S301, the mobile communication device may request the user to input the Personal Identification Number (PIN) of the subscriber identity card coupled therein, so as to enable the subscriber identity card. In other words, the locking of the mobile communication device in the invention is different from the conventional PIN lock.

Next, it is determined whether the subscriber identity card has been registered thereto (step S302). If the subscriber identity card has not been registered to the mobile communication device, the mobile communication device requests the user to input the unlock command (step S303), and then it is determined whether the inputted unlock command is identical to the preconfigured unlock command, i.e., whether the unlock is successful (step S304). If the determination result is negative, the method loops back to step S303.

In step S304, if the determination result is positive, the mobile communication device enters the unlocked state (step S305), in which user access to the mobile communication device is allowed. Subsequently, the mobile communication device performs a 3GPP (3rd Generation Partnership Project) NAS (Non-Access Stratum) attach procedure to attach to a service network and starts a guard timer (step S306), and then determines whether the 3GPP NAS attach procedure is successful before the guard timer expires (step S307). Before the guard timer expires, the mobile communication device may retry the 3GPP NAS attach procedure until it is successful. If the 3GPP NAS attach procedure is not successful before the guard timer expires, the method ends and the mobile communication device remains in the locked state.

In step S307, if the 3GPP NAS attach procedure is successful before the guard timer expires, the mobile communication device registers the subscriber identity card with its International Mobile Subscriber Identity (IMSI) and the random number (RAND) and the signed response (SRES) respectively retrieved from the challenge and challenge response which are sent to and from the subscriber identity card for authentication with the service network during the 3GPP NAS attach procedure (step S308), and then the method ends. By registering the subscriber identity card, the IMSI along with the RAND and the SRES are stored in the mobile communication device, e.g., the storage unit 30.

In another embodiment, apart from the 3GPP NAS attach procedure, the mobile communication device may send another challenge to the subscriber identity card and receive a corresponding challenge response therefrom, and retrieve another RAND and SRES respectively from the challenge and challenge response for registering the subscriber identity card.

In step S302, if the subscriber identity card has been registered to the mobile communication device, the mobile communication device determines whether the subscriber identity card is authentic by checking a challenge response received from the subscriber identity card (step S309). Specifically, the mobile communication device first uses the IMSI of the subscriber identity card as an index to retrieve the stored RAND and the SRES, and then sends a challenge comprising the RAND to the subscriber identity card and receives a challenge response comprising an SRES and a temporary key (Kc) from the subscriber identity card. If the SRES from the challenge response is identical to the stored SRES, the subscriber identity card is authentic; otherwise, the subscriber identity card is not authentic. In step S309, if the subscriber identity card is not authentic, i.e., the subscriber identity card may be a fake one cloned from the authentic one, the mobile communication device considers the subscriber identity card as not having been registered (step S310), and the method continues to step S303.

In one embodiment, when the subscriber identity card is a SIM card or a USIM card with GSM security context enabled, the RAND is 128 bits long, the SRES is 32 bits long, and the Kc is 64 bits long according to the 3GPP Technical Specifications (TS) 33.102 and 31.900.

According to the 3GPP TS 33.102 and 31.900, different subscriber identity cards are supposed to have different secret keys, so different subscriber identity cards output different SRESs even when receiving the same RAND. Due to the fact that the secret key is only known to the telecom operator and the authentic subscriber identity card, a fake subscriber identity card which is cloned from the authentic subscriber identity card does not have the secret key. Thus, with the checking using the stored RAND and SRES, the fake subscriber identity card will be considered as different from the authentic subscriber identity card.

Similarly, different subscriber identity cards output different Kc's even when receiving the same RAND, and thus, with checking using the stored RAND and Kc, a fake subscriber identity card which is cloned from the authentic subscriber identity card will be considered as different from the authentic subscriber identity card. That is, in another embodiment for step S308, the IMSI may be stored along with the RAND and the Kc instead of the SRES, for registering the subscriber identity card, and correspondingly, in step S309, the subscriber identity card may be determined to be authentic if the Kc from the challenge response is identical to the stored Kc.

Back to step S309, if the subscriber identity card is authentic, the mobile communication device performs a 3GPP NAS attach procedure to attach to a service network and starts a guard timer (step S311), and then determines whether the 3GPP NAS attach procedure is successful before the guard timer expires (step S312). Before the guard timer expires, the mobile communication device may retry the 3GPP NAS attach procedure until it is successful. If the 3GPP NAS attach procedure is not successful before the guard timer expires, the method ends and the mobile communication device remains in the locked state. Otherwise, if the 3GPP NAS attach procedure is successful before the guard timer expires, the mobile communication device enters the unlocked state (step S313), and then the method ends.

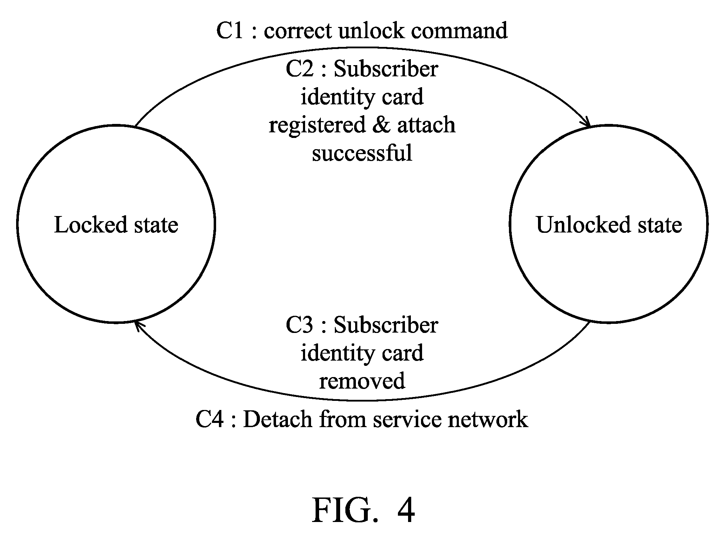

Fig. 4 is a state transition diagram for the locking and unlocking of a mobile communication device according to the embodiment of Fig. 3. In the locked state, the mobile communication device will be locked from any user access when the screen is switched off or when the mobile communication device is idle (i.e., no user operation of the mobile communication device is detected) for a predetermined period of time, and once the mobile communication device is locked, no user access to the mobile communication device is allowed without the correct unlock command (denoted as C1 in Fig. 4). Alternatively, the locking of the mobile communication device will be removed when the 3GPP NAS attach procedure is successfully performed with the subscriber identity card that has been registered before (denoted as C2 in Fig. 4).

In the unlocked state, user access to the mobile communication device is allowed at any time. However, the unlocking of the mobile communication device will be canceled when the subscriber identity card is removed (denoted as C3 in Fig. 4) or when the mobile communication device is detached from any service network (denoted as C4 in Fig. 4).

## Claims

1. A mobile communication device (110), initially configured to enter a locked state upon being powered on, comprising:
a wireless communication unit (20) performing wireless transmission and reception to and from a service network (120); and
a processing unit (40) determining whether a subscriber identity card coupled in the mobile communication device (110) is authentic, by checking a challenge response received from the subscriber identity card;
**characterized in that**
the processing unit (40) further performs an attach procedure with the service network (120) via the wireless communication unit (20) while the mobile communication device (110) remaining in the locked state, in response to the subscriber identity card being authentic, and allows the mobile communication device (110) to enter an unlocked stated from the locked state in response to the attach procedure being successful.

2. The mobile communication device (110) of claim 1, wherein the processing unit (40) further locks the mobile communication device (110) from any user access in response to a screen (10) of the mobile communication device (110) being switched off or in response to there being no user operation of the mobile communication device (110) detected for a predetermined period of time.

3. The mobile communication device (110) of claim 1 or 2, wherein the processing unit (40) further sends a challenge to the subscriber identity card before receiving the challenge response from the subscriber identity card, and the subscriber identity card is determined to be authentic when the challenge response is identical to a predetermined response corresponding to the challenge.

4. The mobile communication device (110) of claim 3, wherein, when the subscriber identity card is a Subscriber Identity Module (SIM) card or Universal SIM (USIM) card, the challenge comprises a 128 bit random number (RAND), and the challenge response comprises a 32 bit signed response (SRES) and a 64 bit temporary key (Kc).

5. The mobile communication device (110) of one of the preceding claims, wherein the processing unit (40) further determines whether the subscriber identity card has been registered to the mobile communication device (110), and the determining of whether the subscriber identity card is authentic is performed in response to the subscriber identity card having been registered to the mobile communication device (110).

6. The mobile communication device (110) of claim 5, wherein the processing unit (40) further requests a user of the mobile communication device (110) to input an unlock command in response to the subscriber identity card not having been registered to the mobile communication device (110).

7. The mobile communication device (110) of claim 6, wherein the processing unit (40) further determines whether the unlock command is identical to a preconfigured unlock command, and allows the mobile communication device (110) to enter the unlocked stated from the locked state in response to the unlock command being identical to the preconfigured unlock command.

8. A method for user access control over a mobile communication device (110) which is initially configured to enter a locked state upon being powered on, the method comprising:
determining, by the mobile communication device (110), whether a subscriber identity card coupled therein is authentic, by checking a challenge response received from the subscriber identity card;
the method is **characterized by**:
performing, by the mobile communication device (110), an attach procedure with a service network (120) while remaining in the locked state. in response to the subscriber identity card being authentic; and
entering, by the mobile communication device (110), an unlocked stated from the locked state in response to the attach procedure being successful.

9. The method of claim 8, further comprising:
locking, by the mobile communication device (110), from any user access in response to a screen of the mobile communication device (110) being switched off or in response to there being no user operation of the mobile communication device (110) detected for a predetermined period of time.

10. The method of claim 8 or 9, further comprising:
sending, by the mobile communication device (110), a challenge to the subscriber identity card before receiving the challenge response from the subscriber identity card,
wherein the subscriber identity card is determined to be authentic when the challenge response is identical to a predetermined response corresponding to the challenge.

11. The method of claim 10, wherein, when the subscriber identity card is a Subscriber Identity Module (SIM) card or Universal SIM (USIM) card, the challenge comprises a 128 bit random number (RAND), and the challenge response comprises a 32 bit signed response (SRES) and a 64 bit temporary key (Kc).

12. The method of one of claims 8 to 11, further comprising:
determining, by the mobile communication device (110), whether the subscriber identity card has been registered thereto,
wherein the determining of whether the subscriber identity card is authentic is performed in response to the subscriber identity card having been registered to the mobile communication device (110).

13. The method of claim 12, further comprising:
requesting, by the mobile communication device (110), a user to input an unlock command in response to the subscriber identity card not having been registered to the mobile communication device (110).

14. The method of claim 13, further comprising:
determining, by the mobile communication device (110), whether the unlock command is identical to a preconfigured unlock command; and
entering, by the mobile communication device (110), the unlocked stated from the locked state in response to the unlock command being identical to the preconfigured unlock command.

## Patentansprüche

1. Mobile Kommunikations-Vorrichtung (110), die anfangs konfiguriert ist, um beim Einschalten in einen Verriegelungs-Zustand einzutreten, umfassend:
eine drahtlose Kommunikations-Einheit (20), welche drahtloses Senden und Empfangen zu und von einem Netzwerk-Dienst (120) durchführt; und
eine Verarbeitungs-Einheit (40), welche feststellt, ob eine Teilnehmer-Identifizierungs-Karte, die an die mobile Kommunikations-Vorrichtung (110) angekoppelt ist, authentisch ist, durch das Überprüfen einer Aufforderungs-Antwort, die von der Teilnehmer-Identifizierungs-Karte empfangen wurde;
**dadurch gekennzeichnet, dass**
die Verarbeitungs-Einheit (40) ferner einen Verbindungs-Vorgang mit dem Netzwerk-Dienst (120) mittels der drahtlosen Kommunikations-Einheit (20) durchführt, während die mobile Kommunikations-Vorrichtung (110) in dem Verriegelungs-Zustand verweilt, in Antwort darauf, dass die Teilnehmer-Identifizierungs-Karte authentisch ist, und es der mobile Kommunikations-Vorrichtung (110) erlaubt, von dem Verriegelungs-Zustand in einen unverriegelten Zustand einzutreten, in Antwort darauf, dass der Verbindungs-Vorgang erfolgreich war.

2. Mobile Kommunikations-Vorrichtung (110) nach Anspruch 1, wobei die Verarbeitungs-Einheit (40) die mobile Kommunikations-Vorrichtung (110) ferner vor jedem Benutzer-Zugriff verriegelt, in Antwort darauf, dass ein Bildschirm (10) der mobile Kommunikations-Vorrichtung (110) ausgeschaltet wurde, oder in Antwort darauf, dass über eine vorbestimmte Zeitdauer keine Benutzer-Vorgang der Kommunikations-Vorrichtung (110) erkannt wurde.

3. Mobile Kommunikations-Vorrichtung (110) nach Anspruch 1 oder 2, wobei die Verarbeitungs-Einheit (40) ferner eine Aufforderung an die Teilnehmer-Identifizierungs-Karte sendet bevor die Aufforderungs-Antwort von der Teilnehmer-Identifizierungs-Karte empfangen wird, dass die Teilnehmer-Identifizierungs-Karte authentisch festgestellt wird, wenn die Aufforderungs-Antwort zu einer vorbestimmten Antwort, die zu der Aufforderung korrespondiert, identisch ist.

4. Mobile Kommunikations-Vorrichtung (110) nach Anspruch 3, wobei, wenn Teilnehmer-Identifizierungs-Karte eine Teilnehmer-Identifizierungs-Modul-(SIM) Karte oder eine Universal-Teilnehmer-Identifizierungs-Modul- (USIM) Karte ist, die Aufforderung eine 128-Bit Zufallsnummer (RAND) umfasst und die Aufforderungs-Antwort eine signierte 32 Bit Antwort (SRES) und einen vorläufigen 64-Bit Schlüssel (Kc) umfasst,.

5. Mobile Kommunikations-Vorrichtung (110) nach einem der vorgehenden Ansprüche, wobei die Verarbeitungs-Einheit (40) ferner bestimmt, ob die Teilnehmer-Identifizierungs-Karte zu der mobilen Kommunikations-Vorrichtung (110) registriert wurde, und wobei die Feststellung, ob die Teilnehmer-Identifizierungs-Karte authentisch ist, in Antwort darauf ausgeführt wird, dass die Teilnehmer-Identifizierungs-Karte zu der mobilen Kommunikations-Vorrichtung (110) registriert wurde.

6. Mobile Kommunikations-Vorrichtung (110) nach Anspruch 5, wobei die Verarbeitungs-Einheit (40) ferner einen Benutzer der mobilen Kommunikations-Vorrichtung (110) dazu auffordert, einen Entriegelungs-Befehl einzugeben, in Antwort darauf, dass die Teilnehmer-Identifizierungs-Karte nicht zu der Kommunikations-Vorrichtung (110) registriert wurde.

7. Mobile Kommunikations-Vorrichtung (110) nach Anspruch 6, wobei die Verarbeitungs-Einheit (40) ferner feststellt ob der Entriegelungs-Befehl identisch mit einem vorbestimmten Entriegelungs-Befehl ist, und es der mobilen Kommunikations-Vorrichtung (110) erlaubt, von dem Verriegelungs-Zustand in den unverriegelten Zustand einzutreten, in Antwort darauf, dass der Entriegelungs-Befehl identisch mit einem vorbestimmten Entriegelungs-Befehl ist.

8. Verfahren zur Benutzer-Zugriffs-Steuerung über eine mobile Kommunikations-Vorrichtung (110), die anfangs konfiguriert ist, beim Einschalten in einen Verriegelungs-Zustand einzutreten, wobei das Verfahren umfasst:
Feststellen durch die Kommunikations-Vorrichtung (110), ob eine Teilnehmer-Identifizierungs-Karte, die darin angekoppelt ist, authentisch ist, durch das Überprüfen einer Aufforderungs-Antwort, welche von der Teilnehmer-Identifizierungs-Karte empfangen wurde;
wobei das Verfahren **gekennzeichnet ist durch**:
Ausführen eines Verbindung-Vorgangs mit einem Netzwerk-Dienst (120) durch die mobile Kommunikations-Vorrichtung (110) während eines Verweilens in dem Verriegelungs-Zustand, in Antwort darauf, dass die Teilnehmer-Identifizierungs-Karte authentisch ist; und
Eintreten der mobilen Kommunikations-Vorrichtung (110) in einen unverriegelten Zustand von einem Verriegelungs-Zustand aus, in Antwort darauf, dass der Verbindungs-Vorgang erfolgreich war.

9. Verfahren nach Anspruch 8, ferner umfassend:
Verriegeln durch die mobile Kommunikations-Vorrichtung (110) gegen jeden Benutzer-Zugriff, in Antwort darauf, dass ein Bildschirm der mobilen Kommunikations-Vorrichtung (110) ausgeschaltet wurde, oder in Antwort darauf, dass von der mobilen Kommunikations-Vorrichtung (110) für eine vorbestimmte Zeitdauer kein Benutzer-Vorgang erkannt wurde.

10. Verfahren nach Anspruch 8 oder 9, ferner umfassend:
Senden einer Aufforderung an die Teilnehmer-Identifizierungs-Karte durch die mobile Kommunikations-Vorrichtung (110), und Empfangen der Aufforderungs-Antwort von der Teilnehmer-Identifizierungs-Karte,
wobei die Teilnehmer-Identifizierungs-Karte als authentisch festgestellt wird, wenn die Aufforderungs-Antwort identisch mit einer vorbestimmten Antwort ist, welche zu der Aufforderung korrespondiert.

11. Verfahren nach Anspruch 10, wobei, wenn die Teilnehmer-Identifizierungs-Karte eine Teilnehmer-Identifizierungs-Modul- (SIM) Karte oder eine Universal-Teilnehmer-Identifizierungs-Modul- (USIM) Karte ist, die Aufforderung eine 128-Bit Zufallsnummer (RAND) umfasst und die Aufforderungs-Antwort eine signierte 32 Bit Antwort (SRES) und einen vorläufigen 64-Bit Schlüssel (Kc) umfasst.

12. Verfahren nach einem der Ansprüche 8 bis 11, ferner umfassend:
Feststellen durch die Kommunikations-Vorrichtung (110), ob die Teilnehmer-Identifizierungs-Karte dazu registriert wurde,
wobei das Feststellen, ob die Teilnehmer-Identifizierungs-Karte authentisch ist, in Antwort darauf ausgeführt wird, dass die Teilnehmer-Identifizierungs-Karte zu der mobilen Kommunikations-Vorrichtung (110) registriert wurde.

13. Verfahren nach Anspruch 12, ferner umfassend:
Anfordern des Benutzers durch die mobile Kommunikations-Vorrichtung (110), um einen Entriegelungs-Befehl einzugeben, in Antwort darauf, dass die Teilnehmer-Identifizierungs-Karte nicht zu der mobilen Kommunikations-Vorrichtung (110) registriert wurde.

14. Verfahren nach Anspruch 13, ferner umfassend:
Feststellen durch die Kommunikations-Vorrichtung (110), ob der Entriegelungs-Befehl identisch mit einem vorbestimmten Entriegelungs-Befehl ist; und
Eintreten der mobilen Kommunikations-Vorrichtung (110) in den unverriegelten Zustand von dem Verriegelung-Zustand aus, in Antwort darauf, dass der Entriegelungs-Befehl identisch mit dem vorbestimmten Entriegelungs-Befehl ist.

## Revendications

1. Un dispositif de communication mobile (110), configuré initialement pour entrer dans un état de verrouillage lors de la mise sous tension, comprenant :
une unité de communication sans fil (20) effectuant une transmission et une réception sans fil vers et depuis un réseau de service (120) ; et
une unité de traitement (40) déterminant si une carte d'identité d'abonné couplée au dispositif de communication mobile (110) est authentique, au moyen d'une vérification d'une réponse à un challenge reçu de la carte d'identité d'abonné ;
**caractérisé en ce que**
l'unité de traitement (40) effectue en outre une procédure d'attachement au réseau de service (120) via l'unité de communication sans fil (20) pendant que le dispositif de communication mobile (110) demeure dans l'état de verrouillage, en réponse à une authenticité de la carte d'identité d'abonné, et permet au dispositif de communication mobile (110) de passer d'un mode verrouillé à un mode déverrouillé en réponse à l'aboutissement de la procédure d'attachement.

2. Le dispositif de communication mobile (110) de la revendication 1, dans lequel l'unité de traitement (40) procède en outre au verrouillage du dispositif de communication mobile (110) à partir de tout accès utilisateur en réponse à l'extinction d'un écran (10) du dispositif de communication mobile (110) ou en réponse à la détection durant une durée prédéterminée d' une absence d'opération d'utilisateur du dispositif de communication mobile (110).

3. Le dispositif de communication mobile (110) de la revendication 1 ou 2, dans lequel l'unité de traitement (40) transmet en outre un challenge à la carte d'identité d'abonné avant de recevoir la réponse au challenge de la carte d'identité d'abonné, et la carte d'identité d'abonné est déterminée être authentique lorsque la réponse au challenge est identique à une réponse prédéterminée correspondant au challenge.

4. Le dispositif de communication mobile (110) de la revendication 3, dans lequel, lorsque la carte d'identité d'abonné est une carte de Module d'Identité d'Abonné (SIM) ou carte SIM universelle (USIM), le challenge comporte un nombre aléatoire de 128 bit (RAND), et la réponse au challenge comporte une réponse signée de 32 bit (SRES) et une clé provisoire de 64 bits (Kc).

5. Le dispositif de communication mobile (110) de l'une quelconque des revendications précédentes, dans lequel l'unité de traitement (40) détermine en outre si la carte d'identité d'abonné a été enregistrée dans le dispositif de communication mobile (110), et la détermination de l'authenticité de la carte d'identité d'abonné est effectuée en réponse à l'enregistrement de la carte d'identité d'abonné dans le dispositif de communication mobile (110).

6. Le dispositif de communication mobile (110) de la revendication 5, dans lequel l'unité de traitement (40) exige en outre qu'un utilisateur du dispositif de communication mobile (110) saisisse une commande de déverrouillage lorsque la carte d'identité d'abonné n'a pas été enregistrée dans le dispositif de communication mobile (110).

7. Le dispositif de communication mobile (110) de la revendication 6, dans lequel l'unité de traitement (40) détermine en outre si la commande de déverrouillage est identique à une commande de déverrouillage préconfigurée, et autorise le dispositif de communication mobile (110) à entrer dans le mode déverrouillé depuis le mode verrouillé lorsque la commande de déverrouillage est identique à la commande de déverrouillage préconfgurée.

8. Un procédé de contrôle d'accès utilisateur d'un dispositif de communication mobile (110) qui est initialement configuré pour entrer dans un mode de verrouillage lors de la mise sous tension, le procédé comprenant les étapes :
la détermination, par le dispositif de communication mobile (110), de l'authenticité d'une carte d'identité d'abonné qui y est couplée, au moyen d'une vérification d'une réponse à un challenge reçu de la carte d'identité d'abonné ;
le procédé étant **caractérisé par** :
la mise en oeuvre, par le dispositif de communication mobile (110), d'une procédure d'attachement à un réseau de service (120) durant l'état de verrouillage, en réponse à l'authenticité de la carte d'identité d'abonné, et
l'entrée du dispositif de communication mobile (110) dans un état de déverrouillage depuis l'état de verrouillage en réponse au succès de la procédure d'attachement.

9. Le procédé de la revendication 8, comprenant en outre :
le verrouillage, par le dispositif de communication mobile (110), de tout accès utilisateur en réponse à l'extinction de l'écran du dispositif de communication mobile (110) ou en réponse à une absence d'interaction avec un utilisateur du dispositif de communication mobile (110) durant une période prédéterminée.

10. Le procédé de la revendication 8 ou 9, comprenant en outre :
la transmission, par le dispositif de communication mobile (110), d'un challenge à la carte d'identité d'abonné préalablement à la réception d'une réponse de challenge depuis la carte d'identité d'abonné.

11. Le procédé de la revendication 10, dans lequel, lorsque la lorsque la carte d'identité d'abonné est une carte de Module d'Identité d'Abonné (SIM) ou carte SIM universelle (USIM), le challenge comporte un nombre aléatoire de 128 bit (RAND), et la réponse au challenge comporte une réponse signée de 32 bit (SRES) et une clé provisoire de 64 bits (Kc).

12. Le procédé de l'une quelconque de revendications 8 à 11, comprenant e outre :
la détermination, par le dispositif de communication mobile (110), du fait de savoir si la carte d'identité d'abonné y a été enregistrée,
dans lequel la détermination de l'authenticité de la carte d'identité d'abonné est effectuée en réponse à l'enregistrement de la carte d'identité d'abonné dans le dispositif de communication mobile (110).

13. Le procédé de la revendication 12, comprenant en outre :
la demande à un utilisateur, par le dispositif de communication mobile (110), de saisir une commande de déverrouillage lorsque la carte d'identité d'abonné n'a pas été enregistrée dans le dispositif de communication mobile (110).

14. Le procédé de la revendication 13, comprenant en outre :
la détermination, par le dispositif de communication mobile (110), de savoir si une commande de déverrouillage est identique à une commande de déverrouillage préconfigurée ; et
le passage du dispositif de communication mobile (110) d'un état verrouillé à un état déverrouillé en réponse à l'identité de la commande de déverrouillage à la commande de déverrouillage préconfigurée.
